(19) Europäisches Patentamt
European Patent Office
Office européen des brevets

(11) EP 4 776 392 A1

(12) **EUROPEAN PATENT APPLICATION**
published in accordance with Art. 153(4) EPC

(43) Date of publication:
**15.07.2026 Bulletin 2026/29**

(21) Application number: 25835357.2

(22) Date of filing: **27.05.2025**

(51) International Patent Classification (IPC):
*H01M 12/08* (2006.01)     *H01M 10/36* (2010.01)
*H01M 50/446* (2021.01)

(52) Cooperative Patent Classification (CPC):
**H01M 8/08; H01M 10/36; H01M 12/08;
H01M 50/446; Y02E 60/50**

(86) International application number:
**PCT/KR2025/007186**

(87) International publication number:
**WO 2026/100869 (15.05.2026 Gazette 2026/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.11.2024 KR 20240157891**

(71) Applicant: SAMSUNG E&A CO., LTD.
Gangdong-gu, Seoul 05288 (KR)

(72) Inventors:
• LEE, Han Uk
  Seoul 05288 (KR)
• CHUNG, Seung Joon
  Seoul 05288 (KR)
• BAE, Sung Ho
  Seoul 05288 (KR)

(74) Representative: **Santarelli
Tour Trinity
1 bis Place de la Défense
92400 Courbevoie (FR)**

(54) **SEAWATER BATTERY**

(57)     A seawater battery is disclosed. The disclosed seawater battery includes an anode electrode chamber, a flow electrode chamber, and a cathode electrode chamber.

FIG. 1

## Description

### Technical Field

Disclosed is a seawater battery. More specifically, disclosed is a seawater battery configured to enable seawater energy storage and resource production.

### Background Art

Seawater batteries, which utilize seawater as an electrolyte, typically exhibit lower energy density than conventional lithium-ion batteries, primarily due to the suboptimal conductivity and electrolyte properties of seawater. Furthermore, energy loss may occur during the charge and discharge processes, potentially leading to reduced efficiency.

Additionally, seawater batteries tend to display relatively slow charge and discharge rates, as the migration of sodium ions within seawater is slower than that in other battery systems.

Moreover, repeated charge and discharge cycles over extended periods can cause degradation of electrode materials and deterioration of electrolyte performance, thereby shortening the lifetime of a battery.

Further, efficient operation of a seawater battery requires maintaining the circulation and purity of the seawater, as contamination or impurities can adversely affect battery performance.

These limitations hinder the commercial application of seawater batteries, creating a need for technological improvements to address these issues.

### Disclosure of Invention

### Technical Problem

An embodiment of the present invention provides a seawater battery configured to enable seawater energy storage and resource production.

### Solution to Problem

One aspect of the present disclosure provides a seawater battery including:

an anode electrode chamber;
a flow electrode chamber; and
a cathode electrode chamber.

The seawater battery may be configured such that charging and discharging occur simultaneously.

The seawater battery may further include a first organic-inorganic composite membrane arranged between the anode electrode chamber and the flow electrode chamber, and a second organic-inorganic composite membrane arranged between the flow electrode chamber and the cathode electrode chamber.

The seawater battery may further include seawater filled in the anode electrode chamber, an electrolyte filled in the flow electrode chamber, and an aqueous solution filled in the cathode electrode chamber.

The electrolyte may include an aqueous electrolyte, an organic electrolyte, or a combination thereof.

The aqueous solution may include deionized water, a NaOH aqueous solution, or a combination thereof.

The seawater battery may be configured such that the anode electrode of the anode electrode chamber and the flow electrode of the flow electrode chamber are electrically connected to each other, and the flow electrode of the flow electrode chamber and the cathode electrode of the cathode electrode chamber are electrically connected to each other.

The seawater battery may be configured such that, during a charging process, chlorine gas and electrons are generated in the anode electrode chamber according to Reaction Scheme 1, the generated chlorine gas is discharged to the outside of the anode electrode chamber, and the generated electrons move to the flow electrode chamber and are stored in the flow electrode of the flow electrode chamber:

$$[\text{Reaction Scheme 1}] \qquad 2Cl^- \rightarrow Cl_2(g) + 2e^-.$$

The seawater battery may be configured such that, during a charging process, sodium ions in the seawater of the anode electrode chamber selectively migrate through the first organic-inorganic composite membrane to the flow electrode chamber and are stored in the flow electrode of the flow electrode chamber.

The seawater battery may be configured such that, during a discharging process, sodium ions and electrons are desorbed from the flow electrode of the flow electrode chamber, the desorbed sodium ions migrate through the second organic-inorganic composite membrane to the cathode electrode of the cathode electrode chamber, and the desorbed electrons move to the cathode electrode of the cathode electrode chamber.

The seawater battery may be configured such that, during the discharging process, hydrogen gas is generated in the cathode electrode chamber according to Reaction Scheme 2, sodium hydroxide is generated according to Reaction Scheme 3, and the generated hydrogen gas and sodium hydroxide are recovered from the cathode electrode chamber:

$$[\text{Reaction Scheme 2}] \qquad 2H_2O + 2e^- \rightarrow H_2(g) + 2OH^-,$$

$$[\text{Reaction Scheme 3}] \qquad Na^+ + OH^- \rightarrow NaOH.$$

The flow electrode chamber may be configured as a closed-loop system.

## Advantageous Effects of Invention

The seawater battery according to an embodiment of the present disclosure provides the following advantages:

(1) It simultaneously realizes an energy storage system (ESS) function capable of storing large-scale renewable energy and a resource recovery function utilizing seawater or concentrated brine from seawater desalination.
(2) It enables the scale-up and mass production of seawater energy storage and resource recovery systems, achievements previously unattainable with conventional seawater batteries, and allows application across various industries without limitations on the scale of the seawater battery.

## Brief Description of Drawings

FIG. 1 is a schematic view illustrating a seawater battery according to an embodiment of the present disclosure.
FIG. 2 is a schematic view illustrating a seawater battery according to a Reference Example.
FIG. 3 is a graph showing the selective permeability performance of an organic-inorganic composite membrane for sodium ions ($Na^+$) in the seawater battery of FIG. 1.
FIG. 4 is a graph comparing the performance of the seawater batteries shown in FIGS. 1 and 2.
FIG. 5 is a graph showing charge/discharge characteristics of the seawater battery of FIG. 1.

## Best Mode for Carrying out the Invention

## Mode for the Invention

Hereinafter, a seawater battery according to an embodiment of the present disclosure will be described in detail with reference to the drawings.

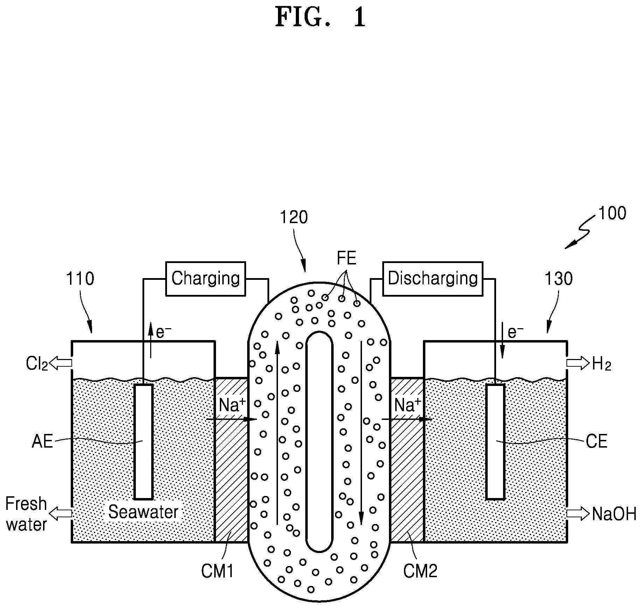

FIG. 1 is a schematic view illustrating a seawater battery 100 according to an embodiment of the present disclosure.
Referring to FIG. 1, the seawater battery 100 according to an embodiment of the present disclosure includes an anode electrode chamber 110, a flow electrode chamber 120, and a cathode electrode chamber 130.
The anode electrode chamber 110 may include an anode electrode AE and seawater.
The anode electrode AE may include an anode current collector and a catalyst layer.
The anode current collector may include carbon felt, carbon paper, carbon fiber, a metal thin film, or a combination thereof.
The catalyst layer may be positioned on the anode current collector.
The catalyst layer may include iridium, ruthenium, niobium, oxides of these metals, or a combination thereof. However, the present disclosure is not limited thereto.
The flow electrode chamber 120 may include a flow electrode FE and an electrolyte.
The flow electrode FE may include conductive particles capable of adsorbing or releasing sodium ions through an electrochemical reaction. For example, the flow electrode FE may include carbon-based conductive particles having a particle size in a range of 0.1 to 100 $\mu$m.
In addition, the flow electrode chamber 120 may be configured as a closed-loop system. Specifically, the flow electrode chamber 120 may have a hollow annular shape. Furthermore, inside the flow electrode chamber 120, the flow electrode FE and the electrolyte may circulate in a clockwise or counterclockwise direction due to spatial variations in the concentration of sodium ions (Na+) within the electrolyte.

Due to this closed-loop configuration of the flow electrode chamber 120 and the circulation of the electrolyte containing the flow electrode FE, charging and discharging may occur simultaneously. Specifically, because the flow electrode (FE) continuously circulates within the flow electrode chamber (120), charging may occur in the flow electrode (FE) located in a certain region at a particular point in time, while discharging may occur in the flow electrode (FE) located in another region at that same particular point in time.

In addition, as described above, since the flow electrode chamber 120 is configured as a closed-loop system, the electrolyte containing the flow electrode FE may circulate without cycle limitations, thereby significantly improving the sodium ion storage capacity and energy storage capacity of the seawater battery 100.

The electrolyte may include an aqueous electrolyte, an organic electrolyte, or a combination thereof.

The aqueous electrolyte may include a sodium chloride (NaCl) aqueous solution. Specifically, because the flow electrode FE is made of a material that is stable with respect to of water, the aqueous electrolyte may be used. Further, the seawater battery 100 can continue to operate stably without performance degradation even if water enters the flow electrode chamber 120 during operation of the seawater battery 100.

The organic electrolyte may include sodium biphenyl, dimethoxyethane, or a combination thereof.

The cathode electrode chamber 130 may include a cathode electrode CE and an aqueous solution.

The cathode electrode CE may include a cathode current collector and an active material layer.

The cathode current collector may include carbon felt, carbon paper, carbon fiber, a metal thin film, or a combination thereof.

The active material layer may be positioned on the cathode current collector.

The active material layer may include iridium, ruthenium, niobium, platinum, oxides of these metals, or a combination thereof. However, the present disclosure is not limited thereto.

The aqueous solution may include deionized water, a NaOH aqueous solution, or a combination thereof.

In addition, the seawater battery 100 may be configured such that charging and discharging occur simultaneously.

Furthermore, the seawater battery 100 may further include a first organic-inorganic composite membrane CM1 and a second organic-inorganic composite membrane CM2.

The first organic-inorganic composite membrane CM1 may be positioned between the anode electrode chamber 110 and the flow electrode chamber 120.

The second organic-inorganic composite membrane CM2 may be positioned between the flow electrode chamber 120 and the cathode electrode chamber 130.

The first organic-inorganic composite membrane CM1 and the second organic-inorganic composite membrane CM2 may include an organic material and an inorganic filler filled in the organic material.

The organic material may include a self-healing hydrogel.

The self-healing hydrogel may include polyethylene glycol (PEG), a natural polymer (e.g., gelatin, chitosan), or a combination thereof.

In addition, the self-healing hydrogel may include a dynamic covalent bond and a non-covalent interaction.

The dynamic covalent bond may include an imine bond, a boronate ester bond, a disulfide bond, a hydrogen bond, a coordinate bond, a Diels-Alder reaction, or a combination thereof.

The non-covalent interaction may include an electrostatic interaction, a hydrophobic interaction, a host-guest interaction, or a combination thereof.

The inorganic filler may include an iron (Fe)-based sodium-conductive nanomaterial.

In addition, the seawater battery 100 may be configured such that the anode electrode AE of the anode electrode chamber 110 and the flow electrode FE of the flow electrode chamber 120 are electrically connected to each other, and the flow electrode FE of the flow electrode chamber 120 and the cathode electrode CE of the cathode electrode chamber 130 are electrically connected to each other.

Furthermore, the seawater battery 100 may be configured such that, during a charging process, chlorine gas ($Cl_2$) and electrons (e-) are generated in the anode electrode chamber 110 according to Reaction Scheme 1, the generated chlorine gas ($Cl_2$) is discharged to the outside of the anode electrode chamber 110, and the generated electrons (e-) move to the flow electrode chamber 120 and are stored in the flow electrode FE of the flow electrode chamber 120:

$$[\text{Reaction Scheme 1}] \qquad 2Cl^- \rightarrow Cl_2(g) + 2e\text{-}.$$

In addition, the seawater battery 100 may be configured such that, during the charging process, fresh water is generated in the anode electrode chamber 110, and the generated fresh water is recovered from the anode electrode chamber 110.

Furthermore, the seawater battery 100 may be configured such that, during the charging process, sodium ions (Na+) in the seawater of the anode electrode chamber 110 selectively migrate through the first organic-inorganic composite membrane CM1 to the flow electrode chamber 120 and are stored in the flow electrode FE of the flow electrode chamber 120.

In addition, the seawater battery 100 may be configured such that, during a discharging process, sodium ions ($Na^+$) and electrons (e-) are desorbed from the flow electrode FE of the flow electrode chamber 120, the desorbed sodium ions ($Na^+$) migrate through the second organic-inorganic composite membrane CM2 to the cathode electrode CE of the cathode electrode chamber 130, and the desorbed electrons (e-) move to the cathode electrode CE of the cathode electrode chamber 130.

Moreover, the seawater battery 100 may be configured such that, during the discharging process, hydrogen gas ($H_2$) is generated in the cathode electrode chamber 130 according to Reaction Scheme 2 below, sodium hydroxide (NaOH) is generated according to Reaction Scheme 3 below, and the generated hydrogen gas ($H_2$) and sodium hydroxide (NaOH) are recovered from the cathode electrode chamber 130:

$$[\text{Reaction Scheme 2}] \qquad 2H_2O + 2e\text{-} \rightarrow H_2(g) + 2OH^-,$$

$$[\text{Reaction Scheme 3}] \qquad Na^+ + OH^- \rightarrow NaOH.$$

Hereinafter, the operation process of the seawater battery 100 according to an embodiment of the present disclosure will be described in detail with reference to FIG. 1.

First, seawater is filled into the anode electrode chamber 110 of the seawater battery 100. This seawater contains sodium ions ($Na^+$) and chloride ions ($Cl^-$).

Thereafter, during the charging process of the seawater battery 100, an electrochemical reaction as shown in Reaction Scheme 1 occurs at the anode electrode AE. In this process, chlorine gas ($Cl_2$), electrons (e-), and fresh water are generated. The generated electrons (e-) move to the flow electrode chamber 120 and may be stored in the flow electrode FE.

In addition, during the charging process of the seawater battery 100, Na ions in the anode electrode chamber 110 selectively migrate through the first organic-inorganic composite membrane CM1 to the flow electrode chamber 120 and can be stored in the flow electrode FE of the flow electrode chamber 120.

Meanwhile, during the discharging process of the seawater battery 100, which proceeds simultaneously with the above-described charging process, sodium ions ($Na^+$) and electrons (e-) are desorbed from the flow electrode FE of the flow electrode chamber 120. The desorbed sodium ions ($Na^+$) migrate through the second organic-inorganic composite membrane CM2 to the cathode electrode CE of the cathode electrode chamber 130, and the desorbed electrons (e$^-$) move to the cathode electrode CE of the cathode electrode chamber 130.

Furthermore, during the discharging process of the seawater battery 100, electrochemical reactions as shown in Reaction Schemes 2 and 3 occur at the cathode electrode CE. In this process, hydrogen gas ($H_2$) and sodium hydroxide (NaOH) are generated in the cathode electrode chamber 130.

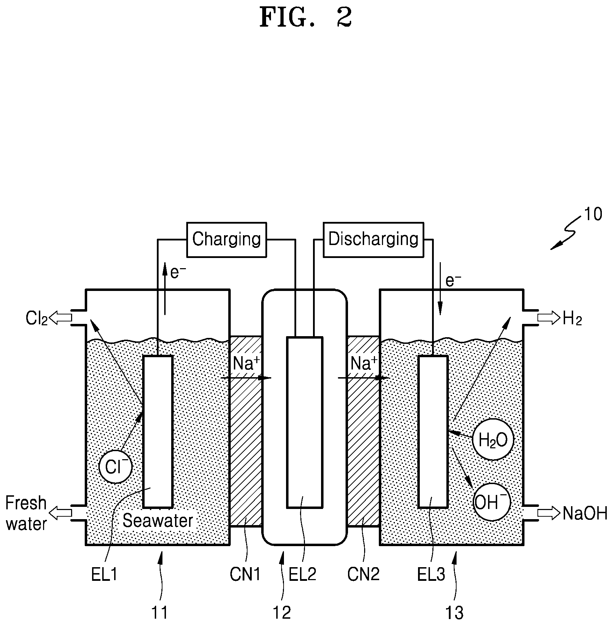

FIG. 2 is a schematic view illustrating a seawater battery 10 according to Reference Example.

Referring to FIG. 2, the seawater battery 10 according to the reference example includes a first electrode chamber 11, a second electrode chamber 12, and a third electrode chamber 13.

The first electrode chamber 11 may include a first electrode EL1 and seawater.

The second electrode chamber 12 may include a second electrode EL2 and an electrolyte.

The second electrode EL2 may be a sodium metal electrode.

The electrolyte may include an organic electrolyte. Specifically, the sodium metal electrode used as the second electrode EL2 is highly vulnerable to water and poses a risk of explosion. Therefore, an organic electrolyte containing no water is required as the electrolyte in the second electrode chamber 12, and if water enters during operation of the seawater battery 10, the performance of the seawater battery 10 decreases exponentially and stability is compromised.

The third electrode chamber 13 may include a third electrode EL3 and an aqueous solution.

The aqueous solution may include deionized water, a NaOH aqueous solution, or a combination thereof.

In addition, the seawater battery 10 may further include a first ceramic separator CN1 and a second ceramic separator CN2.

The first ceramic separator CN1 may be positioned between the first electrode chamber 11 and the second electrode chamber 12.

The second ceramic separator CN2 may be positioned between the second electrode chamber 12 and the third electrode chamber 13.

In addition, the seawater battery 10 may be configured such that the anode electrode AE of the anode electrode chamber 110 and the flow electrode FE of the flow electrode chamber 120 are electrically connected to each other, and the flow electrode FE of the flow electrode chamber 120 and the cathode electrode CE of the cathode electrode chamber 130 are electrically connected to each other.

Furthermore, the seawater battery 10 may be configured such that, during a charging process, chlorine gas ($Cl_2$)

and electrons (e-) are generated in the first electrode chamber 11 according to Reaction Scheme 1, the generated chlorine gas ($Cl_2$) is discharged to the outside of the first electrode chamber 11, and the generated electrons (e-) move to the second electrode chamber 12 and are stored in the second electrode EL2 of the second electrode chamber 12.

In addition, the seawater battery 10 may be configured such that, during the charging process, fresh water is generated in the first electrode chamber 11, and the generated fresh water is recovered from the first electrode chamber 11.

Furthermore, the seawater battery 10 may be configured such that, during the charging process, sodium ions ($Na^+$) in the seawater of the first electrode chamber 11 selectively migrate through the first ceramic separator CN1 to the second electrode chamber 12 and are stored in the second electrode EL2 of the second electrode chamber 12.

In addition, the seawater battery 10 may be configured such that, during a discharging process, sodium ions ($Na^+$) and electrons (e-) are desorbed from the second electrode EL2 of the second electrode chamber 12, the desorbed sodium ions ($Na^+$) migrate through the second ceramic separator CN2 to the third electrode EL3 of the third electrode chamber 13, and the desorbed electrons (e-) move to the third electrode EL3 of the third electrode chamber 13.

Moreover, the seawater battery 10 may be configured such that, during the discharging process, hydrogen gas ($H_2$) is generated in the third electrode chamber 13 according to Reaction Scheme 2, sodium hydroxide (NaOH) is generated according to Reaction Scheme 3, and the generated hydrogen gas ($H_2$) and sodium hydroxide (NaOH) are recovered from the third electrode chamber 13.

In addition, the seawater battery (10) may be configured such that charging and discharging do not occur simultaneously but occur alternately. Specifically, a charging process in which electrons (e-) move from the first electrode EL1 to the second electrode EL2 and are stored in the second electrode EL2, and a discharging process in which electrons (e-) move from the second electrode EL2 to the third electrode EL3, may not occur simultaneously but may occur with a time lag. This is because if a process in which electrons (e-) are stored in the second electrode EL2 at a specific point in time and a process in which electrons (e-) are desorbed from the second electrode EL2 at the specific point in time were to occur simultaneously, neither charging nor discharging would be performed.

Hereinafter, the present disclosure will be described in more detail with reference to examples, but the present disclosure is not limited to these examples.

Example 1: Preparation of Seawater Battery

A seawater battery 100 having the configuration of FIG. 1 was prepared on a laboratory scale. Here, the anode electrode AE included an anode current collector made of a titanium thin film and a catalyst layer made of iridium oxide; the flow electrode FE was carbon-based conductive particles having a particle size in a range of 0.1 $\mu$m to 100 $\mu$m; the aqueous electrolyte was a sodium chloride (NaCl) aqueous solution; the organic electrolyte included sodium biphenyl; the cathode electrode CE included a cathode current collector made of a titanium thin film and an active material layer made of platinum; the aqueous solution was a NaOH aqueous solution; and the first organic-inorganic composite membrane CM1 and the second organic-inorganic composite membrane CM2 were membranes manufactured by the Korea Institute of Energy Research.

Reference Example 1: Preparation of Seawater Battery

A seawater battery 10 having the configuration of FIG. 2 was prepared on a laboratory scale. Here, the first electrode EL1 included a current collector made of carbon felt and a titanium mesh; the organic electrolyte was sodium biphenyl; the second electrode EL2 was a sodium metal electrode; the third electrode EL3 was a stainless steel mesh; and the first ceramic separator CN1 and the second ceramic separator CN2 were ceramic NASICON manufactured by 4 TO ONE.

Evaluation Example 1: Evaluation of Selective Permeability Performance of Organic-Inorganic Composite Membrane for Sodium Ions ($Na^+$)

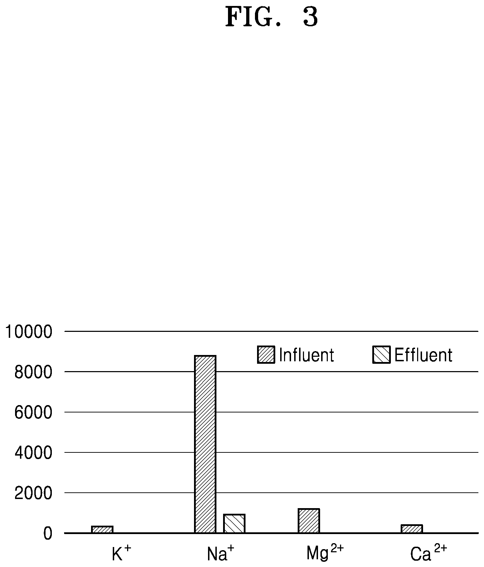

The selective permeability performance of the organic-inorganic composite membranes CM1 and CM2 for sodium ions ($Na^+$) in the seawater battery 100 prepared in Example 1 was tested. The results are shown as a graph in FIG. 3.

Referring to FIG. 3, it was confirmed that, among the major cations ($K^+$, $Na^+$, $Mg^{2+}$, $Ca^{2+}$) contained in seawater, ions other than $Na^+$ ions did not permeate. In particular, it was found that the passage of $K^+$ ions, which are monovalent ions like $Na^+$ ions, was blocked, thereby enabling the production of high-purity NaOH.

Evaluation Example 2: Performance Evaluation of Seawater Battery

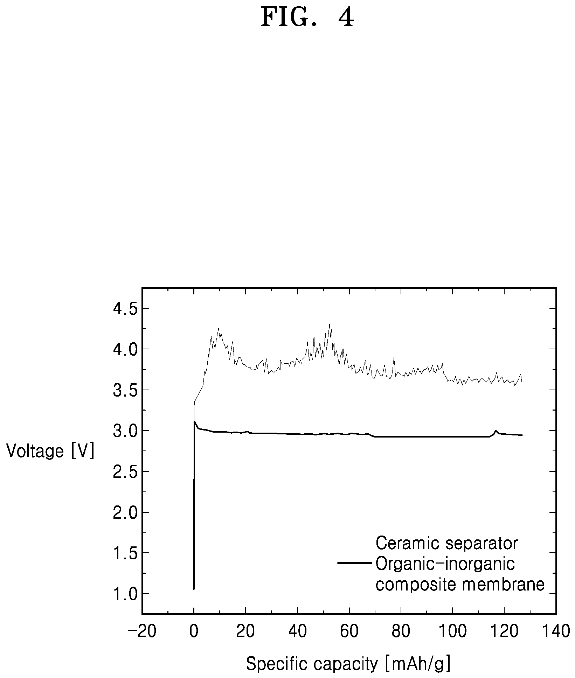

The seawater battery (100) fabricated in Example 1 was operated by a constant current-constant voltage (CC-CV) charge and constant current discharge method. Charging began in a constant current (CC) mode by applying a constant current, and when the cell voltage reached 3 V, it concluded in a constant voltage (CV) mode maintaining 3 V. Subsequently, a discharge was performed, and the specific capacity was calculated based on the discharge process according to Equation 1 below, and the results were shown in the graph in FIG. 4.

$$[\text{Equation 1}]$$

$$\text{Specific Capacity (mA·hr/g)} = I \times \triangle t/m$$

In Equation 1, I is current intensity (mA), m is mass (g) of the flow electrode FE, and $\triangle t$ is charging time (hr).

Referring to FIG. 4, it was found that the seawater battery employing the conventional ceramic separator (Reference Example) stored energy while the voltage exhibited instability. In contrast, the seawater battery employing the organic-inorganic composite membrane (Example 1) was confirmed to store energy while maintaining a 'stable' voltage, due to stable ion migration, selectivity, and rectifying phenomena.

Evaluation Example 3: Evaluation of Charge/Discharge Characteristics of Seawater Battery

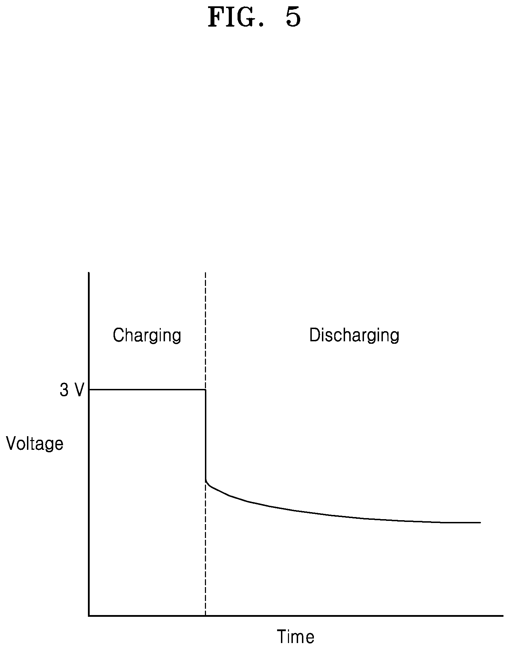

In the seawater battery (100) fabricated in Example 1, a voltage of 3 V was applied to a portion indicated as "charging" to operate the seawater battery (100), and then a resistor was connected to a portion indicated as "discharging" to discharge the seawater battery (100), thereby monitoring charge-discharge characteristics, and the results were graphically shown in FIG. 5.

Referring to FIG. 5, it was found that the seawater battery 100 prepared in Example 1, employing the flow electrode FE, stored sodium ions in the flow electrode FE during the charging process, and recovered energy during the discharging process as the stored sodium ions migrate to the cathode electrode chamber 130 and electrons move. Consequently, the implementation of a seawater battery system employing the flow electrode FE was confirmed to be feasible.

While the present disclosure has been described with reference to exemplary embodiments, it will be understood by those skilled in the art that various changes may be made and equivalents may be substituted for elements thereof without departing from the scope of the disclosure. Therefore, it is intended that the present disclosure not be limited to the particular embodiments disclosed, but that the present disclosure will include all embodiments falling within the scope of the appended claims.

**List of Reference Numerals for Major Elements**

| 10, 100: | SEAWATER BATTERY | 11 to 13: | ELECTRODE CHAMBER |
|---|---|---|---|
| 110: | ANODE ELECTRODE CHAMBER | 120: | FLOW ELECTRODE CHAMBER |
| 130: | CATHODE ELECTRODE CHAMBER | | AE: ANODE ELECTRODE |
| FE: FLOW | ELECTRODE | CE: | CATHODE ELECTRODE |
| EL1 to EL3: | ELECTRODE | CM1, CM2: | ORGANIC-INORGANIC COMPOSITE MEMBRANE |
| CN1, CN2: | CERAMIC SEPARATOR | | |

**Claims**

1.  A seawater battery comprising:

an anode electrode chamber;
a flow electrode chamber; and
a cathode electrode chamber.

2. The seawater battery of claim 1, configured such that charging and discharging occur simultaneously.

3. The seawater battery of claim 2, further comprising:
a first organic-inorganic composite membrane arranged between the anode electrode chamber and the flow electrode chamber; and a second organic-inorganic composite membrane arranged between the flow electrode chamber and the cathode electrode chamber.

4. The seawater battery of claim 3, further comprising:
seawater filled in the anode electrode chamber; an electrolyte filled in the flow electrode chamber; and an aqueous solution filled in the cathode electrode chamber.

5. The seawater battery of claim 4,
wherein the electrolyte comprises an aqueous electrolyte, an organic electrolyte, or a combination thereof.

6. The seawater battery of claim 4,
wherein the aqueous solution comprises deionized water, a NaOH aqueous solution, or a combination thereof.

7. The seawater battery of claim 4,
wherein an anode electrode of the anode electrode chamber and a flow electrode of the flow electrode chamber are electrically connected to each other, and the flow electrode of the flow electrode chamber and a cathode electrode of the cathode electrode chamber are electrically connected to each other.

8. The seawater battery of claim 7,
wherein, during a charging process, chlorine gas and electrons are generated in the anode electrode chamber according to Reaction Scheme 1, the generated chlorine gas is discharged to the outside of the anode electrode chamber, and the generated electrons move to the flow electrode chamber and are stored in the flow electrode of the flow electrode chamber:

[Reaction Scheme 1]     $2Cl^- \rightarrow Cl_2(g) + 2e^-$.

9. The seawater battery of claim 7,
wherein, during a charging process, sodium ions in the seawater of the anode electrode chamber selectively migrate through the first organic-inorganic composite membrane to the flow electrode chamber and are stored in the flow electrode of the flow electrode chamber.

10. The seawater battery of claim 7,
wherein, during a discharging process, sodium ions and electrons are desorbed from the flow electrode of the flow electrode chamber, the desorbed sodium ions migrate through the second organic-inorganic composite membrane to the cathode electrode of the cathode electrode chamber, and the desorbed electrons move to the cathode electrode of the cathode electrode chamber.

11. The seawater battery of claim 10,
wherein, during the discharging process, hydrogen gas is generated in the cathode electrode chamber according to Reaction Scheme 2, sodium hydroxide is generated according to Reaction Scheme 3, and the generated hydrogen gas and sodium hydroxide are recovered from the cathode electrode chamber:

[Reaction Scheme 2]     $2H_2O + 2e^- \rightarrow H_2(g) + 2OH^-$,

[Reaction Scheme 3]     $Na^+ + OH^- \rightarrow NaOH$.

12. The seawater battery of claim 1,
wherein the flow electrode chamber is configured as a closed-loop system.

# FIG. 1

# FIG. 2

# FIG. 3

# FIG. 4

# FIG. 5

## INTERNATIONAL SEARCH REPORT

| International application No. |
|---|
| **PCT/KR2025/007186** |

| A. | CLASSIFICATION OF SUBJECT MATTER |
|---|---|

**H01M 12/08**(2006.01)i; **H01M 10/36**(2006.01)i; **H01M 50/446**(2021.01)i

According to International Patent Classification (IPC) or to both national classification and IPC

| B. | FIELDS SEARCHED |
|---|---|

Minimum documentation searched (classification system followed by classification symbols)

H01M 12/08(2006.01); H01M 50/40(2021.01); H01M 50/446(2021.01); H01M 8/0612(2016.01); H01M 8/0656(2016.01); H01M 8/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 해수 전지 (seawater battery), 애노드 전극 (anode electrode), 캐소드 전극 (cathode electrode), 흐름 전극 (flow electrode), 전해질 (electrolyte), 염소가스 (chlorine gas), 폐루프 (closed loop), 나트륨 이온 (sodium ion), NaOH

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2020-0031206 A (UNIST(ULSAN NATIONAL INSTITUTE OF SCIENCE AND TECHNOLOGY)) 24 March 2020 (2020-03-24)<br>claim 1; paragraphs [0001], [0034]-[0038], [0047]-[0055], [0058], [0059], [0064], [0065], [0072], [0073], [0077], [0079], [0101], [0105], [0114], [0121]-[0126], [0134]; figures 1, 2, 7 | 1-11 |
| Y | | 12 |
| Y | KR 10-2015-0002365 A (KOREA INSTITUTE OF ENERGY RESEARCH) 07 January 2015 (2015-01-07)<br>paragraphs [0041]-[0044] | 12 |
| A | KR 10-1955693 B1 (UNIST(ULSAN NATIONAL INSTITUTE OF SCIENCE AND TECHNOLOGY) et al.) 07 March 2019 (2019-03-07)<br>abstract; claims 1-8, 10-14 | 1-12 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 September 2025** | **03 September 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 776 392 A1**

**INTERNATIONAL SEARCH REPORT**

| International application No. |
|---|
| **PCT/KR2025/007186** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2019-0115608 A (UNIST(ULSAN NATIONAL INSTITUTE OF SCIENCE AND TECHNOLOGY)) 14 October 2019 (2019-10-14)<br>abstract; claims 1-7 | 1-12 |
| A | KR 10-2024-0117846 A (KOREA ADVANCED INSTITUTE OF SCIENCE AND TECHNOLOGY) 02 August 2024 (2024-08-02)<br>abstract; claims 1-10 | 1-12 |
| PX | KR 10-2787144 B1 (SAMSUNG E&A CO., LTD.) 26 March 2025 (2025-03-26)<br>abstract; claims 1, 3-11; figures 1-5<br>※ This document is the published patent of an earlier application that serves as a basis for claiming priority of the present international application. | 1-12 |

Form PCT/ISA/210 (second sheet) (July 2022)

15

EP 4 776 392 A1

**INTERNATIONAL SEARCH REPORT**
Information on patent family members

International application No.

**PCT/KR2025/007186**

| Patent document cited in search report | | | Publication date (day/month/year) | Patent family member(s) | | | Publication date (day/month/year) |
|---|---|---|---|---|---|---|---|
| KR | 10-2020-0031206 | A | 24 March 2020 | KR | 10-2131094 | B1 | 08 July 2020 |
| KR | 10-2015-0002365 | A | 07 January 2015 | KR | 10-1705791 | B1 | 13 February 2017 |
| KR | 10-1955693 | B1 | 07 March 2019 | KR | 10-1955694 | B1 | 07 March 2019 |
| | | | | WO | 2019-156415 | A1 | 15 August 2019 |
| KR | 10-2019-0115608 | A | 14 October 2019 | KR | 10-2042098 | B1 | 07 November 2019 |
| KR | 10-2024-0117846 | A | 02 August 2024 | | None | | |
| KR | 10-2787144 | B1 | 26 March 2025 | | None | | |